# EUROPÄISCHE PATENTSCHRIFT

(11) **EP 2 443 054 B1**
(45) Veröffentlichungstag und Bekanntmachung des Hinweises auf die Patenterteilung: **13.03.2013**
(21) Anmeldenummer: 10744680.9
(22) Anmeldetag: 15.06.2010
(51) Int. Cl.: B65G 69/18, F16K 27/02

(54) **DOPPELKLAPPENVORRICHTUNG ZUM UMWELTDICHTEN VERBINDEN ZWEIER BEHÄLTNISSE**
DUAL FLAP DEVICE FOR THE ENVIRONMENTALLY TIGHT CONNECTION OF TWO RECEPTACLES
DISPOSITIF À DOUBLE CLAPET POUR JONCTION, SANS NUISANCE POUR L'ENVIRONNEMENT, DE DEUX RÉCIPIENTS

(30) Priorität: 15.06.2009 DE 102009025290
(43) Veröffentlichungstag der Anmeldung: 25.04.2012
(73) Patentinhaber: Andocksysteme G. Untch GmbH, 79410 Badenweiler (DE)
(72) Erfinder: UNTCH, Günter, 79379 Müllheim (DE)
(74) Vertreter: Patentanwälte Westphal, Mussgnug & Partner
(86) Internationale Anmeldenummer: PCT/EP2010/003591
(87) Internationale Veröffentlichungsnummer: WO 2010/145804

(56) Entgegenhaltungen:
- EP-A2- 2 179 949
- WO-A1-2010/092395
- WO-A2-2008/071181
- DE-U1- 20 014 871

## Beschreibung

Die Erfindung betrifft eine Doppelklappenvorrichtung gemäß der WO 2008/071181 zum umweltdichten Verbinden zweier Behältnisse nach dem Oberbegriff des Anspruchs 1.

Eine ähuliche Doppelklappen vorrichtung ist in EP 1 213 244 B1 offenbart.

In verfahrenstechnischen Anlagen unterschiedlicher Branchen und auch sonstigen Produktions-, Lagerungs- oder Transporteinrichtungen sind häufig Behälter oder Schläuche als Behältnisse miteinander zu verbinden, um einen Austausch eines fließfähigen Produkts herzustellen. Dabei kann es von Bedeutung sein, dass solche Behältnisse immer verschlossen bleiben, so dass - keine Gefahr einer Kontamination des Inhalts der Behältnisse oder deren Umgebung besteht.

Bekannte Doppelklappenvorrichtungen stellen als Kupplungen Verbindungen zwischen solchen Behältnissen her, wobei jedes der Behältnisse mit einer in einer Gehäusehälfte drehbar gelagerten Klappe verschlossen ist. Erst wenn die Verbindung hergestellt ist, sind die Klappen gemeinsam drehbar, sodass das fließfähige Produkt in einer Durchflussrichtung von einem ersten der Behältnisse in ein zweites der Behältnisse transferiert werden kann. Diese Verbindung sollte weitgehend umweltdicht sein. Auch beim Transferieren bleibt das Produkt möglichst dicht im Inneren verschlossen bzw. durch die Doppelklappenvorrichtung umschlossen.

Bekannte Doppelklappenvorrichtungen sind beispielsweise in der gattunsgogenïβen WO 2008/071181, der EP 1 213 244 B1 oder der DE 200 14 871 U1 offenbart.

Gegenüber bekannten Doppelklappenvorrichtungen sind die Abdichtung der Behältnisse vor, während und nach dem Transferieren des Produkts weiter zu verbessern bzw. zu vereinfachen. Ein Grund für Dichtungsprobleme ist eine unsichere bzw. unvollständige Verbindung bzw. ein unsicherer Verschluss der Gehäusehälften, in denen die Klappen bzw. die Doppelklappe gelagert sind/ist.

Zudem ist die Handhabung bekannter Doppelklappenvorrichtungen oftmals aufwändig und fehleranfällig. Es sind beispielsweise unübersichtlich viele Hebel mit unterschiedlichen Funktionen betätigbar. Teilweise ist eine Verbindung der Gehäusehälften in mehreren Positionen einnehmbar, wobei die Klappen durch Fertigungstoleranzen bedingt nie genau übereinander zu liegen kommen können.

Demnach ist es Aufgabe der Erfindung, vorgenannte Probleme zu lösen und eine einfach zu handhabende, sicher und umweltdicht verbindbare, flexibel einsetzbare Doppelklappenvorrichtung bereitzustellen.

Dieses Problem wird erfindungsgemäß gelöst durch eine Doppelklappenvorrichtung zum umweltdichten Verbinden zweier Behältnisse mit den Merkmalen des Kennzeichens des Anspruchs 1.

Vorteilhafte Ausführungen der Erfindung sind in den Unteransprüchen angegeben sowie der Beschreibung unter Bezugnahme auf die Figuren entnehmbar.

Die Erfindung ermöglicht ein umweltdichtes Verbinden zweier Behältnisse, insbesondere ein kontrolliertes Transferieren eines fließfähigen Produkts, in einer Durchflussrichtung von einem ersten in ein zweites der Behältnisse mit einer Doppelklappenvorrichtung aufweisend zwei Gehäusehälften, die jeweils eine Klappe umfassen. Die Klappen verschließen jeweils die Gehäusehälften und damit jeweils einen Rohrquerschnitt eines der Behältnisse quer zur Durchflussrichtung.

Zwischen den Gehäusehälften ist eine lösbare Verbindung herstellbar. Ist die Verbindung hergestellt, liegen die Gehäusehälften und die darin gelagerten Klappen aneinander an und sind gegeneinander verspannt.

Je nach Form des Rohrquerschnitts wird eine entsprechende Form der Klappe gewählt. In der Regel ist ein Anschlussstutzen mit rundem Querschnitt zu verschließen. In diesem Fall wird eine Gehäusehälfte mit einer runden Klappe an den Anschlussstutzen angeflanscht.

Eine Rotation der aneinander anliegenden Klappen um eine gemeinsame Rotationsachse bewirkt eine Ausrichtung der Klappen in Durchflussrichtung zum Erreichen einer Offenstellung, sodass der Rohrquerschnitt nicht mehr verschlossen ist. Das fließfähige Produkt kann in der Offenstellung durch die Doppelklappenvorrichtung hindurch an den Klappen bzw. der Doppelklappe vorbeiströmen.

Entlang der Rotationsachse weisen die Klappen beidseits Halbwellen auf, die schwenkbar in der zugeordneten Gehäusehälfte gelagert sind. Die Halbwellen der beiden Klappen fallen in der verbundenen Doppelklappenvorrichtung zu einer gemeinsamen Welle mit der Rotationsachse zusammen.

In axialer Verlängerung der jeweiligen Halbwelle weist eine erste der Gehäusehälften mindestens auf einer Seite der jeweiligen Klappe eine Verriegelungseinrichtung auf. Die Verriegelungseinrichtung stellt die lösbare Verbindung zwischen den Gehäusehälften her und verspannt die Gehäusehälften gegeneinander. Durch eine Drehung um die Rotationsachse verstellt die Verriegelungseinrichtung die Doppelklappenvorrichtung zwischen einer Entriegelungs- und einer Verriegelungsposition.

Die erfindungsgemäße Doppelklappenvorrichtung ist besonders einfach zu handhaben, speziell wenn Schläuche oder andere Leitungen miteinander zu verbinden bzw. aneinander anzudocken sind. Außerdem ist durch die axiale Anordnung der Verriegelungseinrichtung und deren Drehbarkeit um die Rotationsachse der Klappen eine Kombinationsmöglichkeit der Verriegelungseinrichtung mit der Verstelleinrichtung eröffnet.

In einer vorteilhaften Ausführungsform ist vorgesehen, dass eine zweite der Gehäusehälften in axialer Verlängerung der jeweiligen Halbwelle mindestens auf einer Seite der jeweiligen Klappe ein Verriegelungselement aufweist. Dieses Verriegelungselement wirkt mit der Verriegelungseinrichtung zusammen. In der Verriegelungsposition ist das Verriegelungselement der zweiten Gehäusehälfte durch die Verriegelungseinrichtung der ersten Gehäusehälfte zumindest teilweise umgreifbar.

Bevorzugt wird die Verriegelungseinrichtung dazu mit einem Verriegelungshebel betätigt. Wird die Verriegelungseinrichtung um die Rotationsachse gedreht, umschließt sie nach und nach einen immer größeren Abschnitt des Umfangs des Verriegelungselements.

Eine Sicherungseinrichtung sieht in einer weiteren Ausführungsform vor, dass die Drehung der Verriegelungseinrichtung zum vollständigen Umschließen des Verriegelungselements geführt haben muss, bevor die Verstelleinrichtung betätigbar ist.

Somit ist die Sicherheit gegen unbeabsichtigte Verstellungen weiter erhöht.

Eine weitere Ausführungsform sieht vor, dass beide Gehäusehälften in axialer Verlängerung der jeweiligen Halbwelle beide eine Verriegelungseinrichtung aufweisen, aber jeweils auf nur einer Seite der jeweiligen Klappe. Es handelt sich folglich um identische oder nahezu identische Gehäusehälften, die in nur einer Ausrichtung zueinander aufeinander andockbar sind. Bevorzugt weisen solche Ausführungsformen der Verriegelungseinrichtung gegenüberliegend ein Verriegelungselement für das Umgreifen durch die entsprechende Verriegelungseinrichtung der anderen Gehäusehälfte.

Vorteilhaft sind eine stets vorbestimmte Lage der Klappen aufeinander und die gewonnene Flexibilität, weil solche Gehäusehälften stets aufeinander passen und es nicht ein Positivelement und ein Negativelement gibt. Voraussetzung ist lediglich eine zueinander passende Form und Größe der Klappen beider Gehäusehälften.

Eine weitere Ausführungsform weist ein der Verstelleinrichtung und der Verriegelungseinrichtung gemeinsames Stellelement und ein Koppelelement auf. Als gemeinsames Stellelement kann bevorzugt ein gemeinsamer Hebel für beide Einrichtungen betätigbar sein. Eine erste Teildrehung des Stellelements ist beispielsweise für die Verriegelungseinrichtung reserviert, während eine zweite Teildrehung des Stellelements die Verstelleinrichtung steuert. Die Verstelleinrichtung soll jedoch erst betätigbar sein, wenn die Gehäusehälften definitiv miteinander verbunden sind. Das Koppelelement koppelt dazu die Verstelleinrichtung und die Verriegelungseinrichtung derart miteinander, dass mittels des gemeinsamen Stellelements in der ersten Teildrehung die lösbare Verbindung zwischen den Gehäusehälften herstellbar ist sowie die Gehäusehälften gegeneinander verspannbar sind und in der zweiten Teildrehung beide Klappen über die gemeinsame Welle zwischen der Schließstellung und der Offenstellung verschwenkbar sind.

Vorzugsweise ist das Koppelelement als federbelasteter Stift in einer Nabe derart ausgebildet, dass in einem belasteten Zustand der Stift die Verstelleinrichtung für eine Rotation in der Verriegelungseinrichtung freigibt. In einem entlasteten Zustand versperrt der Stift hingegen die Einrichtungen gegeneinander. Das Verschwenken der Klappen ist somit nur möglich, während die Gehäusehälften verriegelt sind. Die Verriegelung lässt sich folglich nur dann lösen, wenn die Klappen verschlossen sind.

Eine benutzerfreundliche Reduzierung der Anzahl an Stellgliedern ist dadurch erzielbar, was zu gesteigerter Betriebssicherheit führt.

Die erfindungsgemäße Doppelklappenvorrichtung wird besonders vorteilhaft in verfahrenstechnischen Anlagen verwendet.

Im Folgenden wird die Erfindung anhand von Figuren in zwei Ausführungsbeispielen näher erläutert. Es zeigen:
- Figur 1: eine perspektivische Darstellung einer Doppelklappenvorrichtung gemäß einem ersten Ausführungsbeispiel, wobei eine erste und eine zweite Gehäusehälfte sich voneinander unterscheiden und einander der gegenüber, in Durchflussrichtung ausgerichtet und voneinander beabstandet bereitstehen, also noch nicht aneinander angedockt sind,
- Figur 2: einen Schnitt durch die Doppelklappenvorrichtung aus Figur 1 entlang der Rotationsachse,
- Figur 3: einen Schnitt durch die Doppelklappenvorrichtung aus Figur 1 quer zur Rotationsachse,
- Figur 4: einen Schnitt durch die Doppelklappenvorrichtung aus Figur 1 gemäß Figur 3, wobei die Gehäusehälften aneinander angedockt, jedoch noch nicht miteinander verriegelt sind (Entriegelungsposition) und sich die Klappen in einer Schließstellung befinden,
- Figur 5: einen Schnitt durch die Doppelklappenvorrichtung aus Figur 1 gemäß Figur 4, wobei sich die Gehäusehälften in einer Verriegelungsposition befinden,
- Figur 6: einen Schnitt durch eine Doppelklappenvorrichtung aus Figur 1 entlang der Rotationsachse, wobei sich die Gehäusehälften in der Verriegelungsposition gemäß Figur 5 befinden,
- Figur 7: einen Schnitt durch die Doppelklappenvorrichtung aus Figur 1 in der Verriegelungsposition gemäß der Figur 5, wobei sich die Klappen in einer Offenstellung befinden,
- Figur 8: einen Schnitt durch eine Doppelklappenvorrichtung gemäß einem zweiten Ausführungsbeispiel entlang der Rotationsachse mit zwei identischen, geschlossenen Gehäusehälften, die verdreht zueinander in Durchflussrichtung ausgerichtet und voneinander beabstandet bereitstehen, also noch nicht aneinander angedockt sind,
- Figur 9: einen Schnitt durch die Doppelklappenvorrichtung aus Figur 8, wobei die Gehäusehälften aneinander angedockt sind und sich die Doppelklappenvorrichtung in einer Entriegelungsposition befindet,
- Figur 10: einen Schnitt durch die Doppelklappenvorrichtung aus Figur 8 gemäß Figur 9, wobei sich die Doppelklappenvorrichtung in einer Verriegelungsposition befindet,
- Figur 11: einen Schnitt durch die Doppelklappenvorrichtung aus Figur 8 gemäß Figur 10, wobei die Klappen in einer Offenstellung dargestellt sind,
- Figur 12: einen Schnitt durch einen Dichtring für die Doppelklappenvorrichtung aus den Figuren 1 oder 8,
- Figur 13: eine Draufsicht auf den Dichtring aus Figur 12 und
- Figur 14: eine Detaildarstellung des in Figur 12 mit x gekennzeichneten Bereiches.

In den Figuren sind gleiche bzw. funktionsgleiche Elemente - sofern nichts anderes angegeben ist - mit gleichen Bezugszeichen versehen. Zur besseren Übersicht sind nicht alle Bezugszeichen in allen Figuren eingetragen.

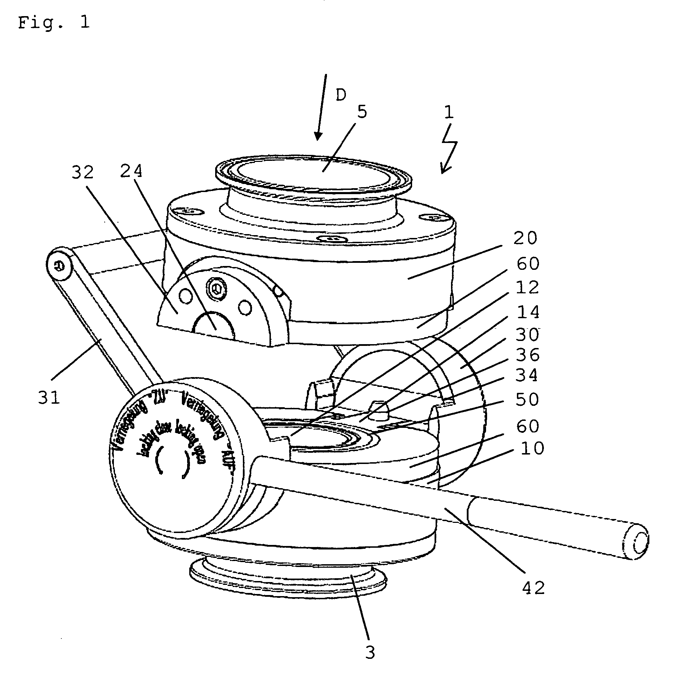

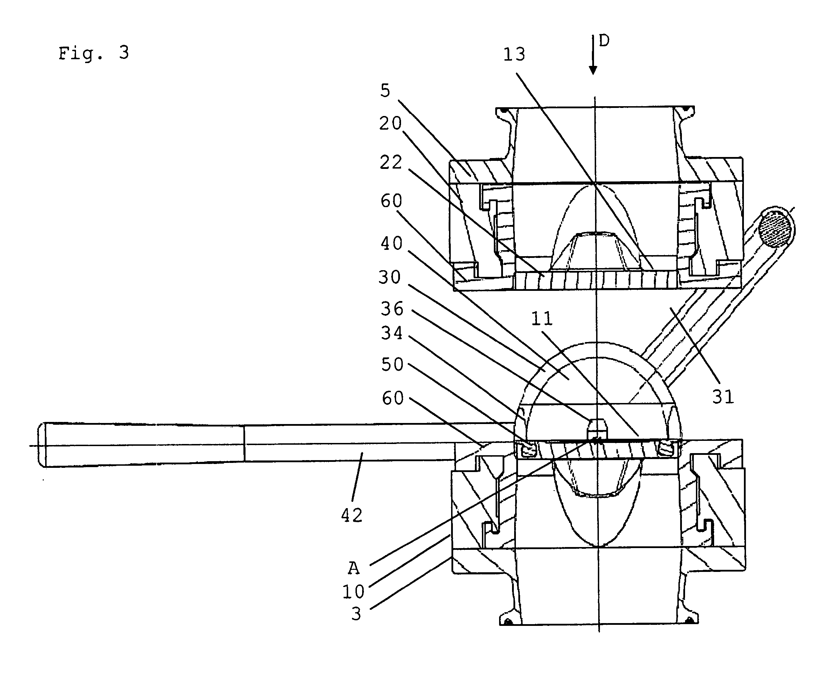

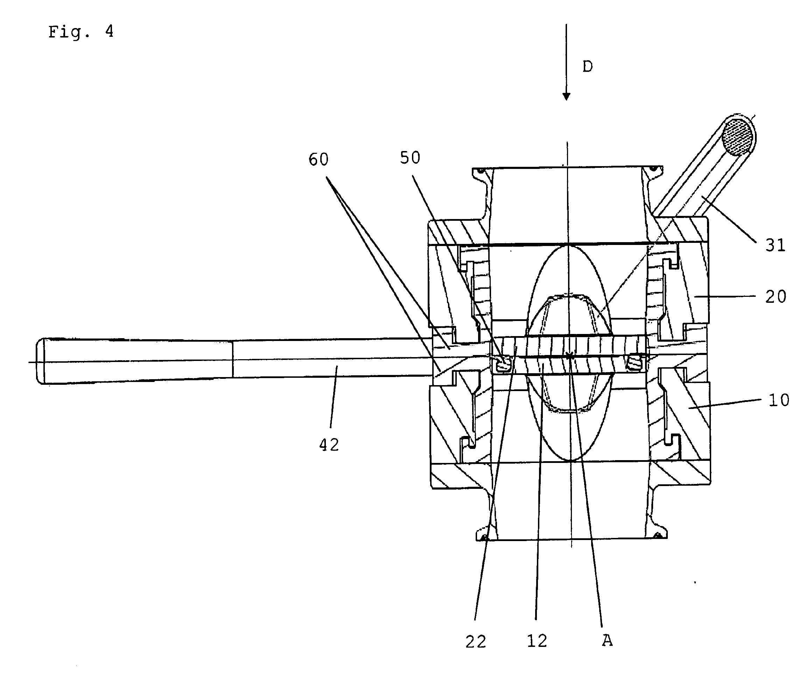

In den Figuren 1 bis 7 ist eine Doppelklappenvorrichtung 1 gemäß einem ersten Ausführungsbeispiel dargestellt. Die Doppelklappenvorrichtung 1 besteht aus einer ersten Gehäusehälfte 10 und einer zweiten Gehäusehälfte 20, zwischen denen eine lösbare Verbindung herstellbar ist. Die Gehäusehälften 10, 20 sind in den Figuren 1 bis 3 voneinander beabstandet, in Durchflussrichtung zueinander ausgerichtet dargestellt. Die Figuren 4 bis 7 zeigen die Doppelklappenvorrichtung 1 mit aneinander anliegenden Gehäusehälften 10, 20. In diesem Zustand spricht man auch von aneinander angedockten Gehäusehälften 10, 20.

Liegen die Gehäusehälften 10, 20 gemäß den Figuren 1 bis 7 aneinander an, ist die Doppelklappenvorrichtung 1 zwischen einer Entriegelungs- und einer Verriegelungsposition verstellbar.

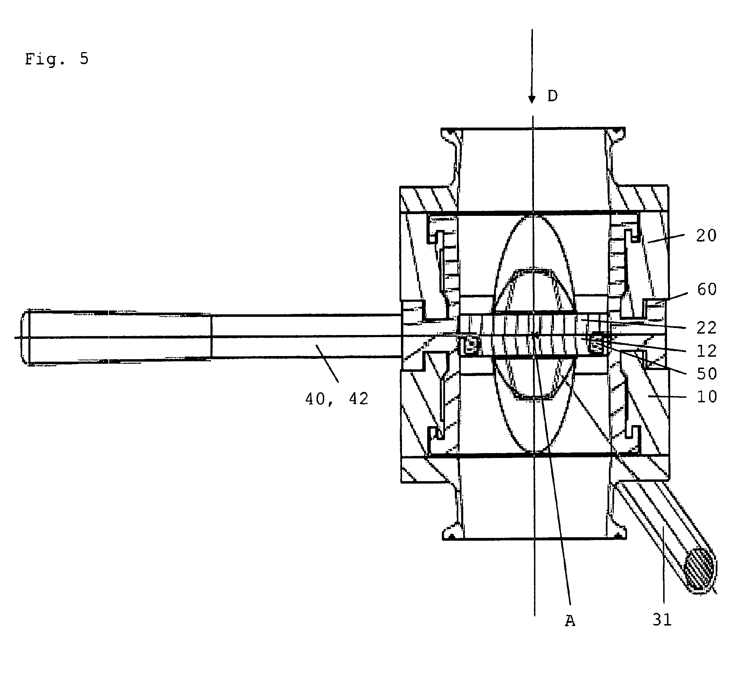

Figur 4 zeigt die Doppelklappenvorrichtung 1 in der Entriegelungsposition. Die Figuren 5 bis 7 zeigen die Doppelklappenvorrichtung 1 in der Verriegelungsposition.

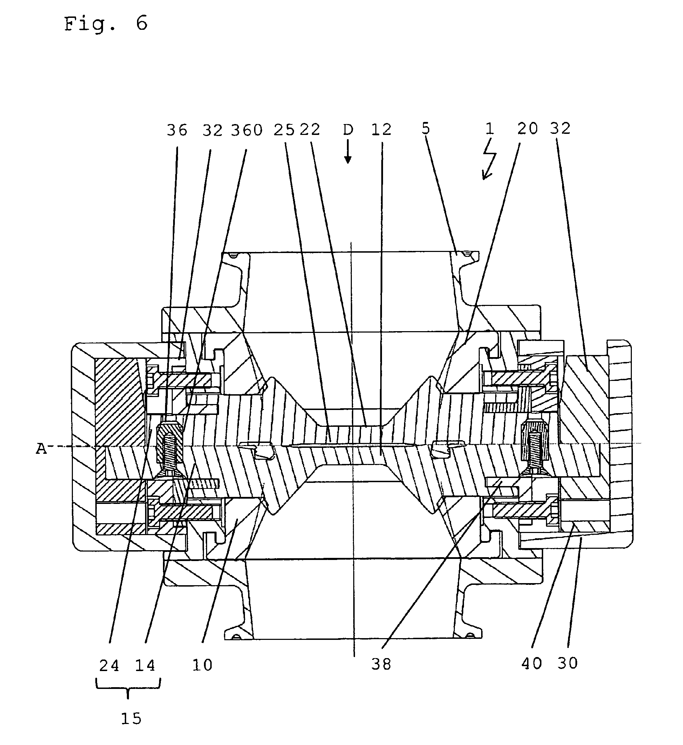

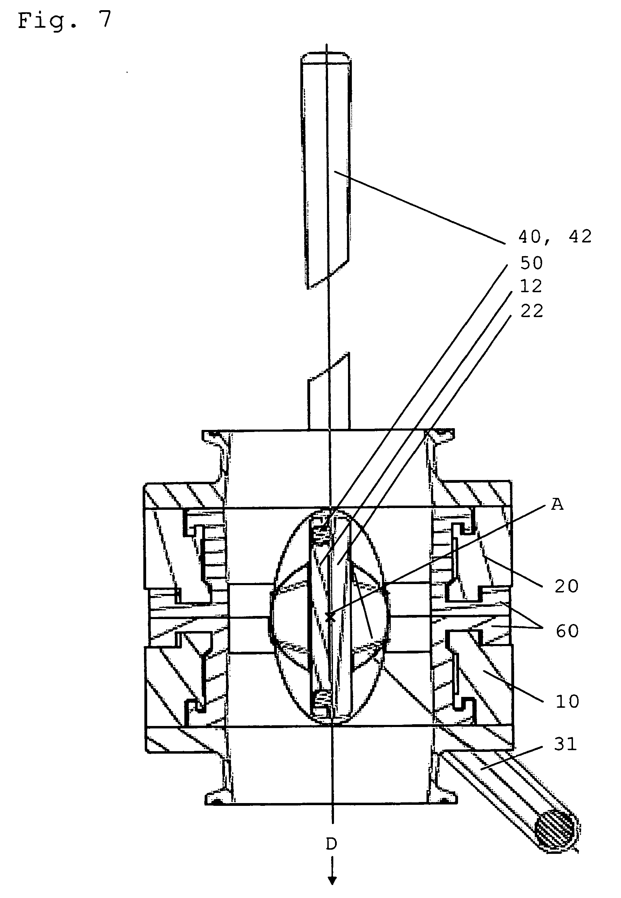

In der Verriegelungsposition ist die Doppelklappenvorrichtung 1 mittels einer Verstelleinrichtung 40 zwischen einer Schließstellung (Figuren 5 und 6) und einer Offenstellung (Figur 7) schwenkbar. In der Offenstellung sind ist die Doppelklappe 12, 22 in Durchflussrichtung D ausgerichtet.

Die erste Gehäusehälfte 10 ist auf einer Seite in Durchflussrichtung D an ein erstes Behältnis 3 angeflanscht. Dieses Anflanschen kann eine Schweißverbindung zwischen der ersten Gehäusehälfte 10 und einem Rohrstutzen sein. Die erste Gehäusehälfte 10 weist zentral ein Loch zur Durchführung bzw. zum Transferieren des Durchflusses in der Durchflussrichtung D auf.

Dem ersten Behältnis 3 abgewandt weist die erste Gehäusehälfte 10 eine ringförmige, in einer Ebene quer zur Durchflussrichtung D liegende Dichtscheibe 60 auf. In der Dichtscheibe 60 bzw. durch die Dichtscheibe 60 axial hindurchgehend in der ersten Gehäusehälfte 10 ist eine erste Klappe 12 um eine Rotationsachse A drehbar gelagert. In der Schließstellung verschließt die erste Klappe 12 das Loch, sodass kein Durchfluss durch die erste Gehäusehälfte 10 stattfindet. Die Rotationsachse A liegt auf einer dem Behältnis 3 abgewandten Oberfläche der Dichtscheibe 60 in einer Schließebene 11 auf. Koaxial zur Rotationsachse A sind in Richtung der Rotationsachse A gesehen auf beiden Seiten der ersten Klappe 12 erste Halbwellen 14 mit der ersten Klappe 12 verbunden. Die Halbwellen 14 können auch in koaxialer Richtung zur Rotationsachse A an die erste Klappe 12 angeformt sein. Somit liegen die ersten Halbwellen 14 mit ihrem runden Umfang in der Dichtscheibe 60 und sind darin drehbar. Die Lagerung ist demnach in Form eines Gleitlagers realisiert. Alternativ sind andere Lagerungen insbesondere mit integrierten Stellaktuatoren, die eine Drehung bewirken, denkbar.

Die ersten Halbwellen 14 werden mit Lagerelementen 38 in der ersten Gehäusehälfte 10 gehalten, sodass die erste Klappe 12 nicht aus der ersten Gehäusehälfte 10 herausfallen kann. Die Lagerelemente 38 können als Buchsen ausgeführt sein. In den Halbwellen 14 sind zur Aufnahme der Buchsen auf der ersten Klappe 12 abgewandten Stirnseiten in Umfangsrichtung verlaufende Nuten vorgesehen.

Auf der Seite der Schließebene 11 ist die erste Klappe 12 leicht konvex ausgeführt, also in Richtung der Durchflussrichtung D in die erste Gehäusehälfte hinein leicht zurückgenommen. In einem Bereich des Umfangs der ersten Klappe 12 weist die Klappe 12 auf der Seite der Schließebene 11 eine umlaufende Nut auf, in die ein Dichtring 50 einsetzbar ist. Der Dichtring 50 erstreckt sich in Radialer Richtung besonders vorteilhaft leicht über den Umfang der ersten Klappe 12 hinaus, sodass sie die angrenzenden ersten Halbwellen 14 einseitig teilflächig, überdeckt.

In axialer Verlängerung der ersten Halbwellen 14 weist die erste Gehäusehälfte 10 beidseitig in Richtung der Rotationsachse A gesehen von innen nach außen eine Verstelleinrichtung 40 und eine Verriegelungseinrichtung 30 auf. Die Verstelleinrichtung 40 einer Seite nimmt die jeweilige erste Halbwelle 14 drehfest auf und ist selbst zumindest teilweise drehbar in der Verriegelungseinrichtung 30 gelagert. Beide Einrichtungen 30, 40 sind somit unabhängig voneinander um die Rotationsachse A drehbar.

Dem ersten Behältnis 3 zugewandt weist die erste Klappe 12 eine erste Ausnehmung 16 in einen zentralen Bereich auf, in dem die erste Klappe 12 somit möglichst dünn ausgebildet ist. Die Ausnehmung 16 erstreckt sich möglichst weit zum Umfang der ersten Platte 12 hin. Radial äußere Wände der Ausnehmung 16 verlaufen in fließfreundlicher Weiterführung der sonstigen Innenkontur des Loches der ersten Gehäusehälfte 10, die den vorgegebenen Rohrquerschnitt unwesentlich verändert, ggf. geringfügig verjüngt.

Die zweite Gehäusehälfte 20 ist grundsätzlich passend zur ersten Gehäusehälfte 10 ähnlich der ersten Gehäusehälfte 10 aufgebaut. Statt der Einrichtungen 30, 40 weist die zweite Gehäusehälfte 20 in axialer Verlängerung zweiter Halbwellen 24 beidseits einer zweiten Klappe 12 Verriegelungselemente 32 auf. Die Verriegelungselemente 32 sind der äußeren Kontur nach als kreiszylindrische Halbzylinder ausgeführt, sodass die Verriegelungseinrichtung 30 der ersten Gehäusehälfte 10 die Verriegelungselemente 32 formschlüssig umschließen können, wenn eine Verriegelung erfolgt.

Die beiden Gehäusehälften 10, 20 können lösbar miteinander verbunden bzw. aneinander angedockt werden. Dazu müssen die Gehäusehälften 10, 20 bezüglich der jeweiligen Rotationsachsen aufeinander ausgerichtet werden, sodass sie auf eine gemeinsame Rotationsachse A fallen.

Bei der Ausrichtung der Gehäusehälften 10, 20 zueinander sind gegenüberliegende Schrägen 34 in einer parallelen Ausrichtung zur Achse A an einer halbe geöffneten Umfangswandung der Verriegelungseinrichtung 30 ausgeführt. Die Verriegelungselemente 32 gleiten beim Andocken von den Schrägen 34 geführt in die koaxiale Position in die Verriegelungseinrichtung 30 hinein.

Zur Feinjustierung sind durch die Schließebene 11 durchstoßende, konisch zulaufende Justiernippel 36 in den ersten Halbwellen 14 angeformt oder befestigt. Entsprechende Zentrierbohrungen 360 sind in den zweiten Halbwellen 24 an den Justiernippeln 36 gegenüberliegenden Positionen zu deren Aufnahme bestimmt. Fangbereiche der Schrägen 34 und der konisch zulaufenden Zentriernippel 36 sind leicht überlappend ausgeführt, sodass eine gute Führung der Gehäusehälften 10, 20 beim Andocken gewährleistet ist.

Die Lagerelemente 38 beider Gehäusehälften 10, 20 sind jeweils drehfest in den Gehäusehälften 10, 20 angeordnet. Sind die Gehäusehälften 10, 20 angedockt und liegen die Rotationsachsen aufeinander, stoßen auch die Lagerelemente 38 mit ihren Teilumfängen aufeinander. So ist während einer Rotation der Halbwellen 14, 24 gewährleistet, dass die Lagerelemente 38 einer Gehäusehälfte 10 im Zuge der Drehung in die entsprechenden Nuten der Halbwelle 14, 24 der anderen Gehäusehälfte 20 eingreifen und umgekehrt.

Die Verriegelungseinrichtung 30 ist mit einem Verriegelungshebel 31 und die Verstelleinrichtung 40 mit einem Stellhebel 42 verdrehbar. Neben solchen oder alternativen Ausgestaltungen manueller Stellelemente sind auch automatisierbare Stellelemente stattdessen verwendbar, beispielsweise pneumatische, hydraulische oder elektrische Aktuatoren.

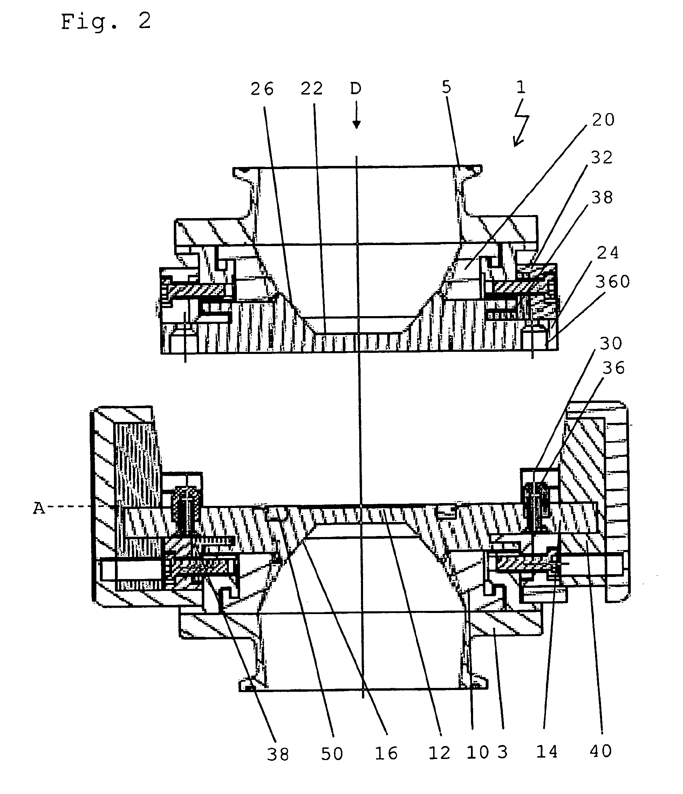

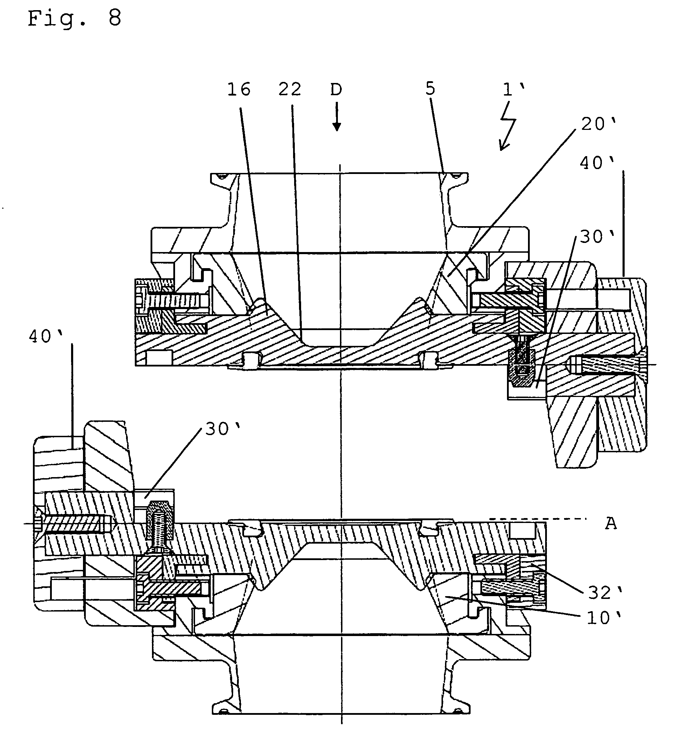

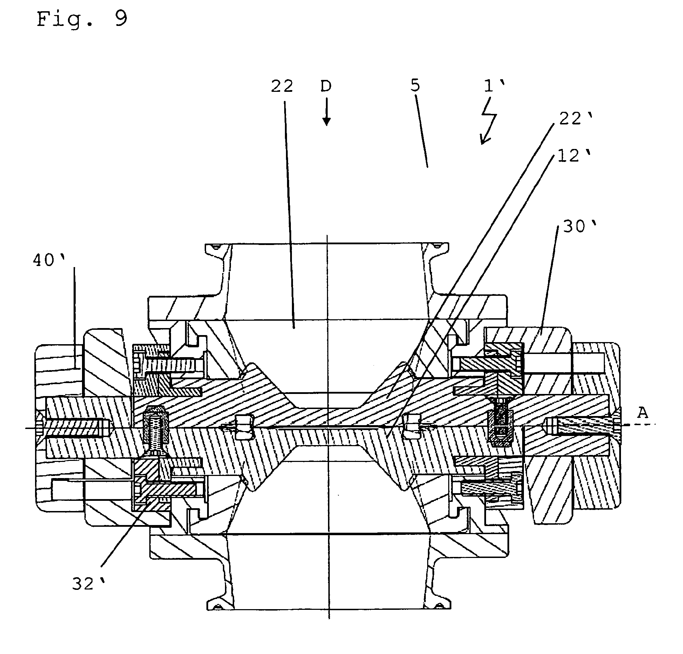

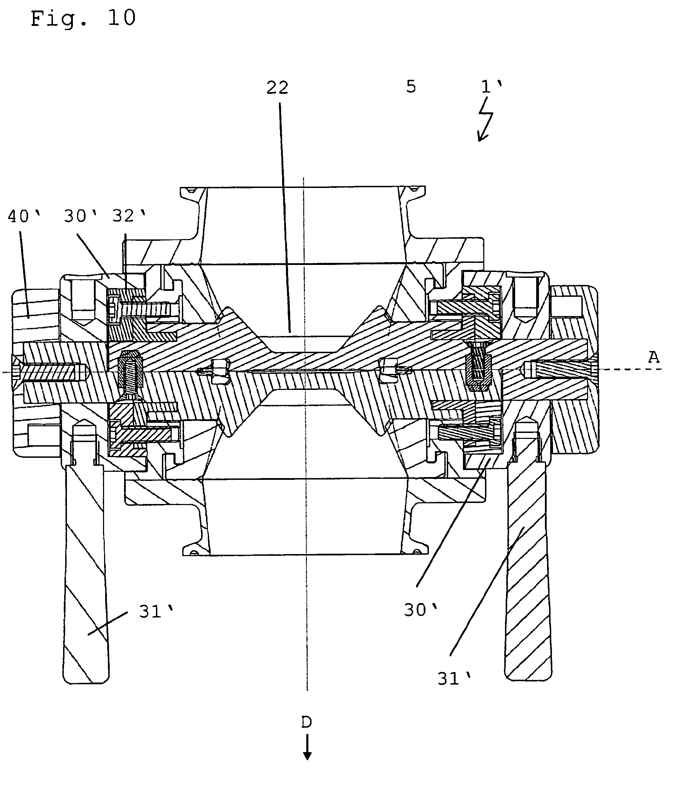

Die Figuren 8 bis 11 zeigen eine Doppelklappenvorrichtung 1' einem zweiten Ausführungsbeispiel in vergleichbarer Darstellung der Betriebsstellungen der Figuren 2, 4, 6 und 7.

Die Doppelklappenvorrichtung 1' unterscheidet sich im Wesentlichen durch die Anordnung der Einrichtungen 30', 40' an den Gehäusehälften 10', 20'. Die Aufnahmen der Schließklappen 12', 24' sind nahezu identisch zum ersten Ausführungsbeispiel ausgeführt.

Die Gehäusehälften 10', 20' sind im zweiten Ausführungsbeispiel identisch ausgebildet, sodass sie gegeneinander um 180° verdreht genau aufeinander passen und miteinander verschließbar sind. Die Verriegelungseinrichtungen 30' und die Verstelleinrichtungen 40' sind je Seite paarweise auf die erste oder die zweite Gehäusehälfte 10', 20' verteilt. Ihnen gegenüber weist in der Konsequenz jede Gehäusehälfte 10', 20' ein Verriegelungselement 32', einen Verriegelungshebel 31' und einen Stellhebel 42' auf.

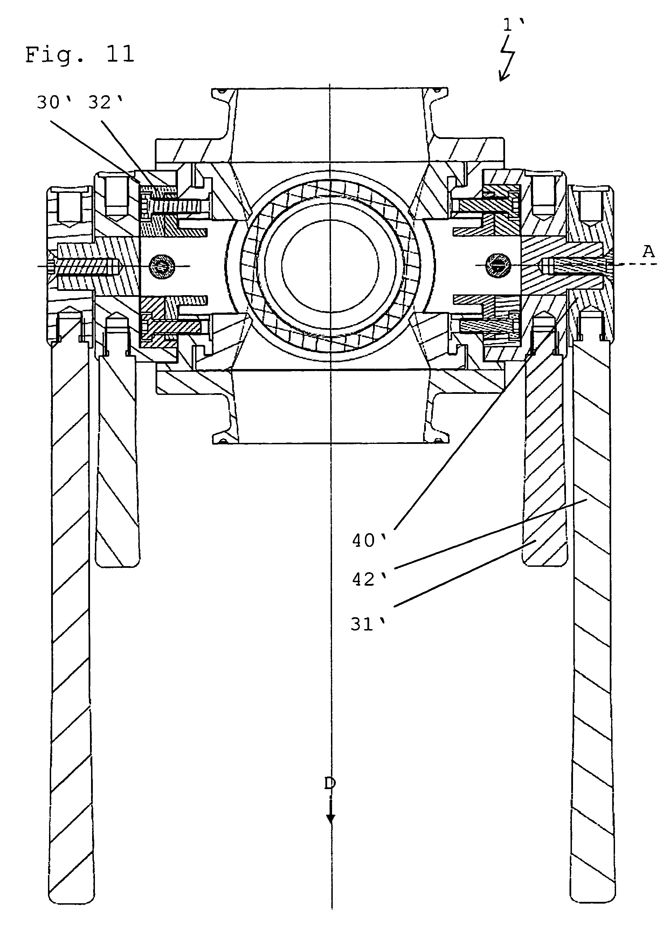

Im Ergebnis ist auch bei der unterschiedlichen Anordnung der Hebel 31', 42' des zweiten Ausführungsbeispiels im Vergleich zum ersten Ausführungsbeispiel eine Verdrehung der ersten und der zweiten Klappe 12', 22' als Doppelklappe in eine Offenstellung gemäß Figur 11 erreichbar.

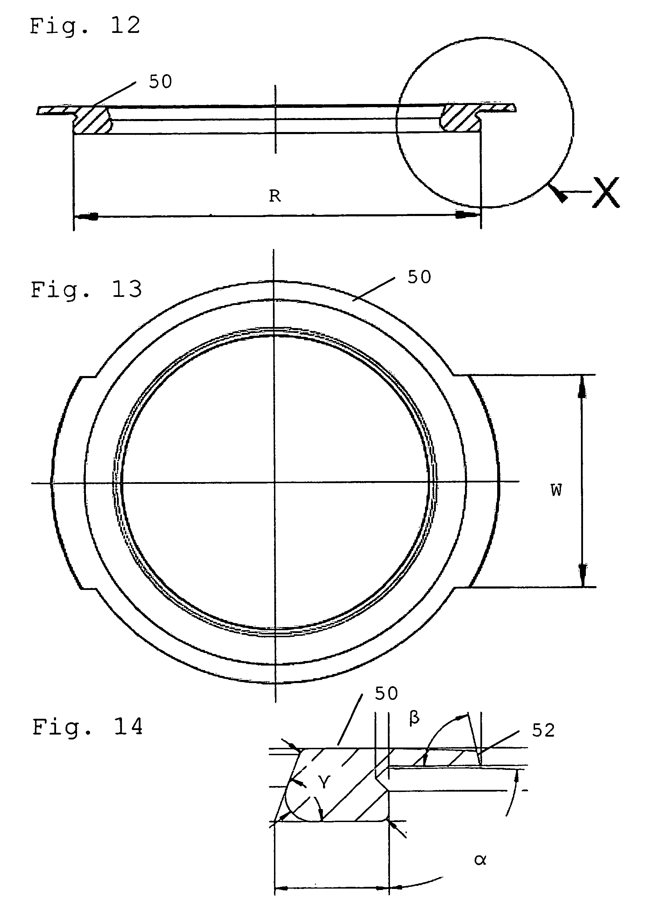

Die Figuren 12 bis 14 zeigen den Dichtring 50 separat dargestellt in zwei Ansichten und einer Detaildarstellung. Die Erfüllung der Funktion des Dichtrings 50 bei der Abdichtung der Klappen 12, 12', 22, 22' bzw. der Halbwellen 14, 24 wird durch eine Ausdehnung des Dichtrings 50 zwischen die Halbwellen 14, 24 erreicht. Dazu ist der Dichtring 50 in Richtung der Rotationsachse A beidseitig in gegenüberliegenden Abschnitten W seines Umfangs breiter ausgebildet. Der Dichtring 50 muss, um ein Verschwenken der Klappen 12, 12', 22, 22' zu ermöglichen, einen kleineren oder maximal gleichen Durchmesser aufweisen als der Klappendurchmesser der Klappen 12, 12', 22, 22'. Mit diesen breiteren Abschnitten W liegt der Dichtring 50 zwischen den Halbwellen 14, 24.

Besonders vorteilhaft sind Seitenwände des Dichtrings 50 in Winkeln β und γ abgeschrägt ausgebildet. In dem jeweiligen Abschnitt W ist der Dichtring 50 nach radial außen in Richtung der den Dichtring 50 im Abschnitt W aufnehmenden Halbwellen 14, 24 mit einer Dichtlippe 52 verbreitert. Die Dichtlippe 52 ist in einem Winkel α zur aufnehmenden Halbwelle 14, 24 hin geneigt.

### Bezugszeichenliste

- 1, 1': Doppelklappenvorrichtung
- 3: erstes Behältnis
- 5: zweites Behältnis

- 10, 10': erste Gehäusehälfte
- 11: Schließebene
- 12, 12': erste Klappe
- 14: erste Halbwelle
- 15: Welle
- 16: erste Ausnehmung

- 20, 20': zweite Gehäusehälfte
- 22, 22': zweite Klappe
- 24: zweite Halbwelle
- 26: zweite Ausnehmung

- 30, 30': Verriegelungseinrichtung
- 31, 31': Verriegelungshebel
- 32, 32': Verriegelungselement
- 33: Kulisse
- 34: Schräge
- 36: Justiernippel
- 38: Lagerelement

- 40, 40': Verstelleinrichtung
- 42, 42': Stellhebel

- 50: Dichtring
- 52: Dichtlippe

- 60: Dichtscheibe

- 360: Zentrierbohrung

- α: Winkel

- A: Rotationsachse
- D: Durchflussrichtung
- R: Durchmesser
- W: Abschnitt

## Patentansprüche

1. Doppelklappenvorrichtung (1, 1') zum umweltdichten Verbinden zweier Behältnisse (3, 5) mit
zwei Gehäusehälften (10, 10'; 20, 20'), zwischen denen eine lösbare Verbindung herstellbar ist,
jeweils einer Klappe (12, 12'; 22, 22') pro Gehäusehälfte (10, 10'; 20, 20'), die mittels einer Halbwelle (14, 24) schwenkbar in der zugeordneten Gehäusehälfte (10, 10'; 20, 20') gelagert ist,
wobei in einer Verbindungsstellung der Doppelklappenvorrichtung (1, 1') die Gehäusehälften (10, 10'; 20, 20') und die Klappen (12, 12'; 22, 22') aneinander anliegen und gegeneinander verspannt sind
und die Halbwellen (14, 24) der beiden Klappen (12, 12'; 22, 22') zu einer gemeinsamen Welle (15) mit einer Rotationsachse (A) zusammenfallen, sodass beide Klappen (12, 12'; 22, 22') mittels einer Verstelleinrichtung (40, 40') über die gemeinsame Welle (15) zwischen einer Schließstellung und einer Offenstellung schwenkbar sind, wobei in der Offenstellung ein fließfähiges Produkt in einer Durchflussrichtung (D) von einem ersten (3) in ein zweites (5) der Behältnisse (3, 5) transferierbar ist, wobei **dadurch gekennzeichnet, dass**
eine erste der Gehäusehälften (10, 10') in axialer Verlängerung der jeweiligen Halbwelle (14) mindestens auf einer Seite der jeweiligen Klappe (12, 12') eine Verriegelungseinrichtung (30, 30') aufweist, mittels derer die Doppelklappenvorrichtung (1, 1') zwischen einer Entriegelungs- und einer Verriegelungsposition verstellbar ist, wobei die Verriegelungseinrichtung (30, 30') die lösbare Verbindung zwischen den Gehäusehälften (10, 10'; 20, 20') herstellt und die Gehäusehälften (10, 10'; 20, 20') gegeneinander verspannt
dadurch gekennezeichnet, dass die Verriegelungs einrichtung (30, 30') in axialer Verlängerung der jeweiligen Halbwelle (14) positioniert ist.

2. Doppelklappenvorrichtung (1, 1') nach Anspruch 1,
**dadurch gekennzeichnet, dass**
eine zweite der Gehäusehälften (20, 20') in axialer Verlängerung der jeweiligen Halbwelle (24) mindestens auf einer Seite der jeweiligen Klappe (22, 22') ein Verriegelungselement (32, 32') aufweist, das in der Verriegelungsposition durch die Verriegelungseinrichtung (30, 30') der ersten Gehäusehälfte (10, 10') zumindest teilweise umgreifbar ist.

3. Doppelklappenvorrichtung (1') nach einem der Ansprüche 1 oder 2,
**dadurch gekennzeichnet, dass**
beide Gehäusehälften (10'; 20') in axialer Verlängerung der jeweiligen Halbwelle (14, 24) jeweils auf einer Seite der jeweiligen Klappe (12'; 22') je eine Verriegelungseinrichtung (30') aufweisen.

4. Doppelklappenvorrichtung (1') nach Anspruch 3,
**dadurch gekennzeichnet, dass**
beide Gehäusehälften (10'; 20') in axialer Verlängerung der jeweiligen Halbwelle (14, 24) auf einer der Verriegelungseinrichtung (30') gegenüberliegenden Seite der jeweiligen Klappe (12'; 22') je ein Verriegelungselement (32') aufweisen.

5. Doppelklappenvorrichtung (1, 1') nach einem der vorangehenden Ansprüche,
**gekennzeichnet durch**
ein der Verstelleinrichtung (40, 40') und der Verriegelungseinrichtung (30, 30') gemeinsames Stellelement und ein Koppelelement, wobei mittels des Koppelelements die Verstelleinrichtung (40, 40') und die Verriegelungseinrichtung (30, 30') derart miteinander koppelbar sind, dass mittels des gemeinsamen Stellelements in einer ersten Teildrehung die lösbare Verbindung zwischen den Gehäusehälften (10, 10'; 20, 20') herstellbar ist sowie die Gehäusehälften (10, 10'; 20, 20') gegeneinander verspannbar sind und in einer zweiten Teildrehung beide Klappen (12, 12'; 22, 22') über die gemeinsame Welle (15) zwischen einer Schließstellung und einer Offenstellung verschwenkbar sind.

6. Doppelklappenvorrichtung (1, 1') nach einem der vorangehenden Ansprüche,
**dadurch gekennzeichnet, dass**
wenigstens eine der Gehäusehälften (10, 10'; 20, 20') eine Dichtscheibe (60) aufweist, die ringförmig um die jeweilige Klappe (12, 12'; 22, 22') herum angeordnet ist und gemeinsam mit der Klappe (12, 12'; 22, 22') in oder parallel zu einer Schließebene (11) liegt.

7. Doppelklappenvorrichtung (1, 1') nach Anspruch 6,
**dadurch gekennzeichnet, dass**
die Dichtscheibe (60) aus Kunststoff besteht.

8. Doppelklappenvorrichtung (1, 1') nach einem der vorangehenden Ansprüche,
**dadurch gekennzeichnet, dass**
wenigstens eine der Klappen (12, 12'; 22, 22') einen Dichtring (50) aufweist, wobei der Dichtring (50) einer Schließebene (11) zwischen den Gehäusehälften (10, 10'; 20, 20') zugewandt in einer umlaufenden Nut der Klappe (12, 12'; 22, 22') einlegbar ist.

9. Doppelklappenvorrichtung (1, 1') nach Anspruch 8,
**dadurch gekennzeichnet, dass**
der Dichtring (50) beim Andocken der Gehäusehälften (10, 10'; 20, 20') deformierbar ist und wenigstens im Zuge des Deformierens einen größeren Umfang als die Klappen (12, 12'; 22, 22') aufweist, sodass der Dichtring (50) in einen Dichtbereich zwischen den Halbwellen (14, 24) ragt.

10. Verwendung der Doppelklappenvorrichtung (1, 1') nach einem der vorangehenden Ansprüche in einer verfahrenstechnischen Anlage.

## Claims

1. A double-flap apparatus (1, 1') for the connection of two containers (3, 5) in a manner sealed off from the environment, with
two housing halves (10, 10'; 20, 20') between which a releasable connection is capable of being formed,
one flap (12, 12'; 22, 22') in each case per housing half (10, 10'; 20, 20') which is mounted in a pivotable manner in the associated housing half (10, 10'; 20, 20') by means of a half-shaft (14, 24),
wherein the housing halves (10, 10'; 20, 20') and the flaps (12, 12'; 22, 22') rest against one another and are stressed against one another in a connection setting of the double-flap apparatus (1, 1')
and the half-shafts (14, 24) of the two flaps (12, 12'; 22, 22') coincide to form a common shaft (15) with an axis of rotation (A), so that the two flaps (12, 12'; 22, 22') are pivotable between a closed setting and an open setting by means of a displacement device (40, 40') by way of the common shaft (15), wherein a flowable product is capable of being transferred in a through-flow direction (D) from a first (3) to a second (5) of the containers (3, 5) in the open setting, wherein
at least on one side of the respective flap (12, 12') a first one of the housing halves (10, 10') has a locking device (30, 30') by means of which the double-flap apparatus (1, 1') is capable of being displaced between an unlocked position and a locked position, wherein the locking device (30, 30') forms the releasable connection between the housing halves (10, 10'; 20, 20'), and the housing halves (10, 10'; 20, 20') are stressed against one another,
**characterized in that** the locking device (30, 30') is positioned in an axial extension of the respective half-shaft (14).

2. A double-flap apparatus (1, 1') according to claim 1, **characterized in that** in an axial extension of the respective half-shaft (24) a second one of the housing halves (20, 20') has - at least on one side of the respective flap (22, 22') - a locking element (32, 32') which is capable of being engaged around at least in part by the locking device (30, 30') of the first housing half (10, 10') in the locking position.

3. A double-flap apparatus (1') according to one of claims 1 or [*sic*] 2, **characterized in that** in an axial extension of the respective half-shaft (14, 24) the two housing halves (10'; 20') have one locking device (30') in each case on one side of the respective flap (12'; 22').

4. A double-flap apparatus (1') according to claim 3, **characterized in that** in an axial extension of the respective half-shaft (14, 24) the two housing halves (10'; 20') have one locking element (32') in each case on a side of the respective flap (12'; 22') opposite the locking device (30').

5. A double-flap apparatus (1, 1') according to any one of the preceding claims, **characterized by** a setting element common to the displacement device (40, 40') and the locking device (30, 30') and by a coupling element, wherein the displacement device (40, 40') and the locking device (30, 30') are capable of being coupled to each other by means of the coupling element in such a way that in a first partial rotation the releasable connection between the housing halves (10, 10'; 20, 20') is capable of being formed by means of the common displacement element and the housing halves (10, 10'; 20, 20') are capable of being stressed against one another, and in a second partial rotation the two flaps (12, 12'; 22, 22') are capable of being pivoted between a closed setting and an open setting by way of the common shaft (15).

6. A double-flap apparatus (1, 1') according to any one of the preceding claims, **characterized in that** at least one of the housing halves (10, 10'; 20, 20') has a sealing disc (60) which is arranged in an annular manner around the respective flap (12, 12'; 22, 22') and is situated jointly with the flap (12, 12'; 22, 22') in or parallel to a closure plane (11).

7. A double-flap apparatus (1, 1') according to claim 6, **characterized in that** the sealing disc (60) consists of plastics material.

8. A double-flap apparatus (1, 1') according to any one of the preceding claims, **characterized in that** at least one of the flaps (12, 12'; 22, 22') has a sealing ring (50), wherein the sealing ring (50) is capable of being inserted in a continuous groove in the flap (12, 12'; 22, 22') so as to face a closure plane (11) between the housing halves (10, 10'; 20, 20').

9. A double-flap apparatus (1, 1') according to claim 8, **characterized in that** the sealing ring (50) is capable of being deformed during the docking of the housing halves (10, 10'; 20, 20') and, at least in the course of the deformation, has a larger periphery than the flaps (12, 12'; 22, 22'), so that the sealing ring (50) projects into a sealing area between the half-shafts (14, 24).

10. Use of the double-flap apparatus (1, 1') according to any one of the preceding claims in a process plant.

## Revendications

1. Dispositif à double clapet (1, 1') pour permettre la liaison étanche vis-à-vis de l'environnement de deux récipients (3, 5) comprenant :
- deux demi boitiers (10, 10', 20, 20') entre lesquels peut être réalisée une liaison amovible,
- un clapet (12, 12', 22, 22') respectif par demi boitier (10, 10', 20, 20') logé pivotant dans le demi boitier (10, 10', 20, 20') associé au moyen d'un demi arbre (14, 24),
- dans une position de liaison du dispositif à double clapet (1, 1') les demi boitiers (10, 10', 20, 20') et les clapets (12, 12', 22, 22') étant appliqués les uns sur les autres et étant serrés les uns contre les autres, et
- les demi arbres (14, 24) des deux clapets (12, 12', 22, 22') coïncident pour former un arbre commun (15) avec un axe de rotation (A) de sorte que les deux clapets (12, 12', 22, 22') puissent être déplacés par pivotement au moyen d'un dispositif de réglage (40, 40') sur cet arbre commun (15) entre une position de fermeture et une position d'ouverture, en position d'ouverture, un produit fluide pouvant être transféré dans une direction d'écoulement (D) d'un premier récipient (3), dans un second récipient (5),
- un premier demi boitier (10, 10') comportant, au moins d'un côté du clapet (12, 12') associé, un dispositif de verrouillage (30, 30') au moyen duquel le dispositif à double clapet (1, 1') peut être réglé entre une position de déverrouillage et une position de verrouillage, le dispositif de verrouillage (30, 30') réalisant la liaison amovible entre les demi boitiers (10, 10', 20, 20'), et serrant les demi boitiers (10, 10', 20, 20') l'un contre l'autre,
**caractérisé en ce que**
le dispositif de verrouillage (30, 30') est positionné dans le prolongement axial du demi arbre respectif (14).

2. Dispositif à double clapet (1, 1') conforme à la revendication 1,
**caractérisé en ce que**
le second demi boiter (20, 20') comporte dans le prolongement axial du demi arbre (24) associé au moins d'un côté du clapet respectif (22, 22') un élément de verrouillage (32, 32') qui peut être enveloppé au moins partiellement par le dispositif de verrouillage (30, 30') du premier demi boitier (10, 10') dans la position de verrouillage.

3. Dispositif à double clapet (1, 1') conforme à l'une des revendications 1 et 2,
**caractérisé en ce que**
les deux demi boitiers (10', 20') comportent chacun, dans le prolongement axial du demi arbre (14, 24) respectif, respectivement d'un côté du clapet (12', 22') respectif un dispositif de verrouillage (30').

4. Dispositif à double clapet (1, 1') conforme à la revendication 3,
**caractérisé en ce que**
les deux demi boitiers (10', 20') comportent chacun un élément de verrouillage (32') dans le prolongement axial du demi arbre (14, 24) respectif d'un côté situé à l'opposé du dispositif de verrouillage (30') du clapet respectif (12', 22').

5. Dispositif à double clapet (1, 1') conforme à l'une des revendications précédentes,
**caractérisé par**
un élément de réglage commun au dispositif de réglage (40, 40') et au dispositif de verrouillage (30, 30') et un élément d'accouplement, cet élément d'accouplement permettant d'accoupler le dispositif de réglage (40, 40') et le dispositif de verrouillage (30, 30') l'un avec l'autre de sorte que, par une première rotation partielle, la liaison amovible entre les demi boitiers (10, 10', 20, 20') puisse être obtenue au moyen de l'élément de réglage commun et que les deux demi boitiers (10, 10', 20, 20') puissent être serrés l'un contre l'autre, et que, par une seconde rotation partielle, les deux clapets (12, 12', 22, 22') puissent être déplacés par pivotement sur l'arbre commun (15) entre une position de fermeture et une position d'ouverture.

6. Dispositif à double clapet (1, 1') conforme à l'une des revendications précédentes,
**caractérisé en ce qu'**
au moins l'un des demi boitiers (10, 10', 20, 20') comporte un disque d'étanchéité (60) positionné annulairement autour du clapet (12, 12', 22, 22') respectif et s'applique avec le clapet (12, 12', 22, 22') dans un plan de fermeture (11) ou parallèlement à un tel plan.

7. Dispositif à double clapet (1, 1') conforme à la revendication 6,
**caractérisé en ce que**
le disque d'étanchéité (60) est réalisé en matière plastique.

8. Dispositif à double clapet (1, 1') conforme à l'une des revendications précédentes,
**caractérisé en ce qu'**
au moins l'un des clapets (12, 12', 22, 22') comporte une bague d'étanchéité (50), cette bague d'étanchéité (50) pouvant être logée dans une rainure périphérique du clapet (12, 12', 22, 22') en étant tournée vers un plan de fermeture (11) entre les deux demi boitiers (10, 10', 20, 20').

9. Dispositif à double clapet (1, 1') conforme à la revendication 8,
**caractérisé en ce que**
la bague d'étanchéité (50) peut être déformée suite à l'amarrage des demi boitiers (10, 10', 20, 20'), et comporte au moins pendant cette déformation un périmètre supérieur à celui des clapets (12, 12', 22, 22') de sorte que la bague d'étanchéité (50) pénètre dans une zone d'étanchéité entre les demi arbre (14, 24).

10. Utilisation du dispositif à double clapet (1, 1') conforme à l'une des revendications précédentes, dans une installation se rattachant au domaine du génie chimique.
